# EUROPÄISCHE PATENTSCHRIFT

(11) **EP 2 293 418 B1**
(45) Veröffentlichungstag und Bekanntmachung des Hinweises auf die Patenterteilung: **04.07.2012**
(21) Anmeldenummer: 10175164.2
(22) Anmeldetag: 03.09.2010
(51) Int. Cl.: F16C 29/00, H02K 7/08, H02K 41/02, H02K 41/03

(54) **Linearmotorsystem**
Linear motor system
Système de moteur linéaire

(30) Priorität: 08.09.2009 AT 14122009
(43) Veröffentlichungstag der Anmeldung: 09.03.2011
(73) Patentinhaber: KML Linear Motion Technology GmbH, 1100 Wien (AT)
(72) Erfinder: Uibeleis, Werner, 1190, WIEN (AT); Wiedrich, Andreas, 1150, WIEN (AT)
(74) Vertreter: Babeluk, Michael

(56) Entgegenhaltungen:
- WO-A1-2009/039865
- DE-A1- 4 301 434
- US-A- 5 831 352

## Beschreibung

Die Erfindung betrifft ein Linearmotorsystem mit einem Grundprofil und einem linear zum Grundprofil bewegbaren Motorschlitten, wobei am Grundprofil zwei separate Führungsschienen und ein Sekundärteil einer Antriebseinheit befestigt sind und der Motorschlitten mit Schlittenführungen und einem Primärteil der Antriebseinheit ausgestattet ist, wobei die Führungsschienen mit Schrauben an einer Seite eines Basisbereiches des Grundprofils befestigt sind.

Linearmotorsysteme sind elektrische Direktantriebe, deren Läufer sich nicht drehen sondern translatorisch bewegen, wobei die mechanische Kraftkupplung zwischen Motor und Arbeitsmaschine direkt erfolgt und Getriebe, Differentiale, Antriebs- und Gelenkwellen zur Gänze entfallen. Trotz vieler Vorteile gegenüber rotierenden Elektromotoren blieb der Einsatz des Linearmotors bisher auf wenige industrielle Anwendungsfelder beschränkt, was sich auf den relativ hohen Preis der Systeme zurückführen lässt. Der Preisunterschied zu konventionellen rotierenden Elektromotoren resultiert daraus, dass der Ständer oder Läufer des Linearmotors meist integraler Bestandteil eines zu bewegenden Anlagenteils ist und somit lineare Antriebe großteils Sonderanfertigungen sind.

In diesem Zusammenhang ist beispielsweise aus der EP 1 927 770 A2 ein Linearmotorsystem bekannt geworden, das einen auf einer Führungsschiene verfahrbaren Motorschlitten aufweist, der im Wesentlichen U-förmig ausgebildet ist und einen Querträgerabschnitt sowie zwei seitliche Schenkelabschnitte umfasst, wobei diese Abschnitte des Motorschlittens die Führungsschiene teilweise umschließen. Am Querträgerabschnitt des verfahrbaren Motorschlittens ist ein Primärteil (Spulenteil) einer Antriebseinheit befestigt, die mit einer Sekundäreinheit (Permanentmagnete) an der Führungsschiene zusammenwirkt. Eine zwischen der Führungsschiene und dem Motorschlitten angeordnete, spielfreie Lagerung weist vier Lagerelemente und vier an der Führungsschiene ausgebildete Lagerflächen zur Abstützung und Führung der Lagerelemente auf, wobei auch Mittel zu deren spielfreien Einstellung vorgesehen sind. Als Führungsschiene wird ein im Querschnitt sehr aufwändiges Profil verwendet, welches im Wesentlichen ebenfalls U-förmig ist, wobei die seitlichen Flansche am freien Ende nach innen weisende Fortsätze aufweisen und einen Raum zur Aufnahme des Primärteils der Antriebseinheit bilden. Derart komplexe Querschnitte sind nur im Stranggussverfahren, bevorzugt aus Aluminium, herstellbar. Außen am Profil sind Laufflächen für den Motorschlitten ausgebildet, wobei die im Stranggussverfahren hergestellten Profile einer aufwändigen Nachbearbeitung (Hartbeschichtung bzw. Belegung mit Stahlblechen) unterzogen werden müssen.

Die DE 20 2007 002 504 U1 zeigt ein Linearmotorsystem mit einem im Querschnitt rechteckförmigen Grundprofil, in welches die als Längsnuten ausgebildeten Führungsschienen in den Seitenflächen einstückig integriert sind. Damit entspricht dieses Motorsystem zumindest in diesem Detail einer durch die EP 1 927 770 A2 beschriebenen Bauart, wodurch auch alle in diesem Zusammenhang oben angeführten Nachteile zutreffen. Gemäß einer ersten Ausführungsvariante sind die quaderförmigen Permanentmagnete des Sekundärteils der Antriebseinheit direkt am Grundprofil angeklebt und wirken mit dem gegenüberliegenden Primärteil zusammen, der am Schlitten des Linearmotors befestigt ist. In einer zweiten Ausführungsvariante wird eine am Grundprofil angeschraubte oder angeklebte Trägerplatte verwendet, auf welcher die Permanentmagnete angeordnet sind.

Aus der EP 1 752 851 A1 ist ein Linearführungssystem mit einer Einrichtung zur Wegmessung bekannt, welche ebenfalls ein Grundprofil mit komplexem Querschnitt und seitlich integrierten Führungsschienen aufweist. Am Grundprofil ist ein Maßstab angeordnet, der eine Inkrementalspur und kodierte Referenzmarken aufweist, die von einer Messkopfeinheit am Schlitten erfasst werden.

Die JP 57-052365 A zeigt ein Linearmotorsystem bei welchem der Schlitten fixiert ist und die im Wesentlichen U-förmige Grundschiene beweglich ausgeführt ist. Auch bei diesem System sind die Führungsschienen integraler Bestandteil der Grundschiene.

Aus der EP 1 217 160 A2 ein Führungssystem für Schiebetore bekannt, welches nur eine einzige Führungsschiene aufweist und daher bevorzugt für hängende Lasten geeignet ist. Die Führungsschiene und der Sekundärteil der Antriebseinheit können gemäß einer Ausführungsvariante auf gegenüberliegenden Seiten des Grundprofils angeordnet sein, müssen allerdings separat justiert und befestigt werden.

Schließlich ist aus der DE 43 01 434 A1 eine Linearführungsanordnung mit Ausgleichsmitteln für mechanische Spannungen bekannt, die ein Basisprofil aufweist, an welchem zwei separate Führungsschienen und die Statorschiene eines Linearmotors befestigt sind. Die Führungsschienen sind mittels Schrauben an jener Seite des Grundprofils befestigt, an der auch die Statorschiene angeordnet ist.

Obwohl derartige bekannte Linearmotorsysteme teilweise hervorragende Werte bei der erreichbaren Grundgenauigkeit zeigen, die selbst bei standardisierten Systemen bei 1 µm bis 5 µm liegt, ist für viele Anwendungsfälle eine derart hohe Präzision nicht unbedingt nötig, wobei man allerdings trotzdem die übrigen Vorteile der Direktantriebstechnik nutzen möchte. Diese Vorteile sind insbesondere Verschleißfreiheit und höchste Dynamik.

Aufgabe der vorliegenden Erfindung ist es daher, Linearmotorsysteme der bekannten Art derart weiterzubilden, dass ein einfacher, modularer Aufbau gewährleistet ist, wobei die Systeme auch auf einfache Weise montierbar und für unterschiedliche Einsatzgebiete adaptierbar sein sollen.

Diese Aufgabe wird erfindungsgemäß dadurch gelöst, dass die beiden Führungsschienen und der Sekundärteil auf gegenüberliegenden Seiten eines Basisbereiches des Grundprofils angeordnet sind, wobei die Schrauben an der den Führungsschienen gegenüberliegenden Seite des Basisbereiches den Sekundärteil der Antriebseinheit befestigen.

Gemäß einer einfachen Ausführungsvariante der Erfindung können die Magnetplatten des Sekundärteils auch nur durch Kleben am Basisbereich des Grundprofils befestigt sein.

Erfindungsgemäß kann dabei ein besonders einfach herzustellendes Grundprofil verwendet werden, welches einen im Wesentlichen U-förmigen Querschnitt mit beidseitig vom Basisbereich fortragenden Flanschbereichen aufweist und vorzugsweise aus verformten Stahlblech gefertigt wird. Die wesentlichen Vorteile liegen somit darin, dass ein billig und einfach herzustellendes Grundprofil verwendet wird, das eine hohe Festigkeit und Verwindungssteifigkeit aufweist und keiner Nachbearbeitung bedarf. Die Schrauben zur Befestigung der Führungsschiene auf einer Seite des Grundprofils werden gleichzeitig für die Befestigung des Sekundärteils der Antriebseinheit verwendet. Aufgrund dieses Aufbaus kann man mit erheblicher Zeitersparnis im Zuge der Montage rechnen.

Besonders vorteilhaft ist es, wenn die Schrauben zur gleichzeitigen Befestigung der Führungsschienen und des Sekundärteils in Sacklochbohrungen der Führungsschienen befestigt sind, da dies die Unempfindlichkeit gegenüber äußeren Einflüssen steigert und eine Ansammlung von störenden Fremdpartikeln in bisher verwendeten durchgehenden Bohrungen verhindert.

Erfindungsgemäß weist der Motorschlitten eine den Primärteil der Antriebseinheit aufnehmende Motorplatte auf, die über Seitenteile mit einer Schlittenplatte verbunden ist, an welcher die Schlittenführungen befestigt sind, wobei die Motorplatte, die Seitenteile und die Schlittenplatte eine in Umfangsrichtung geschlossene Einheit bilden, die vom Grundprofil durchsetzt wird. Der Motorschlitten ist dadurch vor äußeren Einflüssen, wie Verschmutzung, bestens geschützt.

Die wesentlichsten Vorteile des erfindungsgemäßen Linearmotorsystems sind:
- Die Herstellung des Grundprofils basiert auf einem Stahlblech. Das bedeutet, dass z.B. ein U-förmiges Grundprofil durch zwei Biegevorgänge sehr einfach herzustellen ist.
- Die Befestigung der Permanentmagnete bzw. der Trägerplatte mit den darauf befestigten Magneten erfolgt mit der selben Verschraubung mit der die Führungsschienen befestigt sind. Dadurch kann ein Bearbeitungsschritt bei der Herstellung eingespart werden.
- Aufgrund des sehr einfachen Aufbaus werden im Montageprozess ebenfalls die Zeiten optimiert und minimiert.
- Die Einfachheit der Konstruktion dieser Neuentwicklung erlaub auch eine vielfältige Typenvariation, da die Stahlblechelemente der Grundprofile nur entsprechend gebogen werden müssen.
- Verschiedene Leistungs- und Baugrößen können auf einfache Weise hergestellt werden.
- Es kann sehr kurzfristig auf spezielle Kundenwünsche reagiert werden, ohne sehr hohe Lagerkosten zu generieren, da die Hauptbauteile sehr rasch und einfach herzustellen sind.
- Es besteht eine hohe Robustheit gegen Einflüsse aus der Umgebung.

Die Erfindung wird im Folgenden anhand von Ausführungsbeispielen näher erläutert. Es zeigen:
- Fig. 1: eine Schnittdarstellung eines Linearmotorsystems gemäß Stand der Technik;
- Fig. 2: ein erfindungsgemäßes Linearmotorsystem in einer dreidimensio- nalen Darstellung;
- Fig. 3: eine Schnittdarstellung des Linearmotorsystems gemäß Linie III-III in Fig. 5;
- Fig. 4: eine Schnittdarstellung des Linearmotorsystems gemäß Linie IV-IV in Fig. 5; sowie
- Fig. 5: einen Längsschnitt des Linearmotorsystems gemäß Linie V-V in Fig. 2.

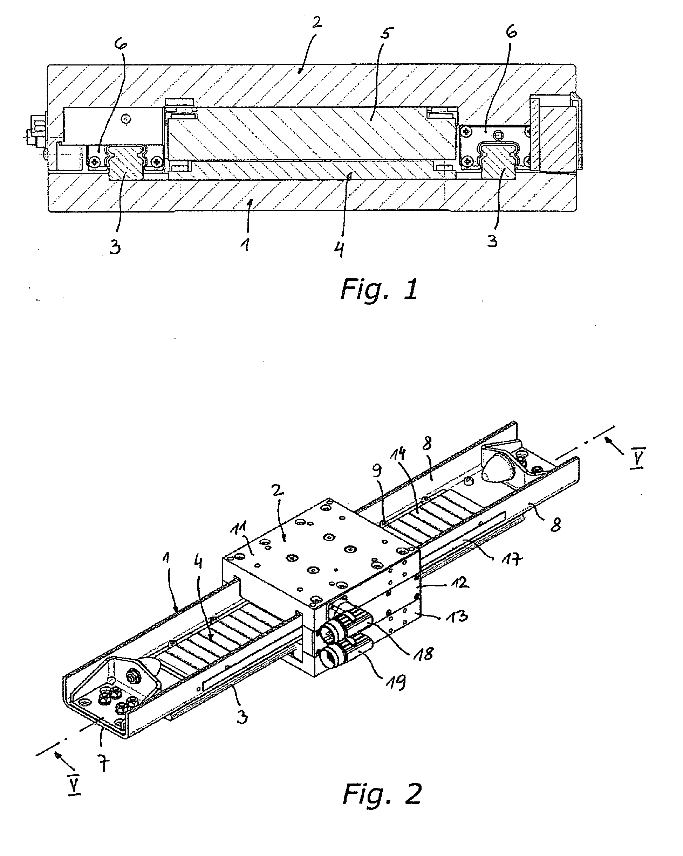

Das in Fig. 1 dargestellte Linearmotorsystem gemäß Stand der Technik (System LMS 2 der KML Linear Motion Technology GmbH; siehe www.kml.at) weist ein Grundprofil 1 und einen iinear zum Grundprofil beweglichen Motorschlitten 2 auf, wobei das Grundprofil 1 mit zwei separaten Führungsschienen 3 und einem zwischen den Führungsschienen 3 angeordneten Sekundärteil 4 ausgestattet ist. Im Motorschlitten 2 ist der Primärteil 5 der Antriebseinheit angeordnet sowie die an den Führungsschienen 3 gleitenden Schlittenführungen 6. Der Motorschlitten 2 und das Grundprofil 1 bestehen aus Aluminium.

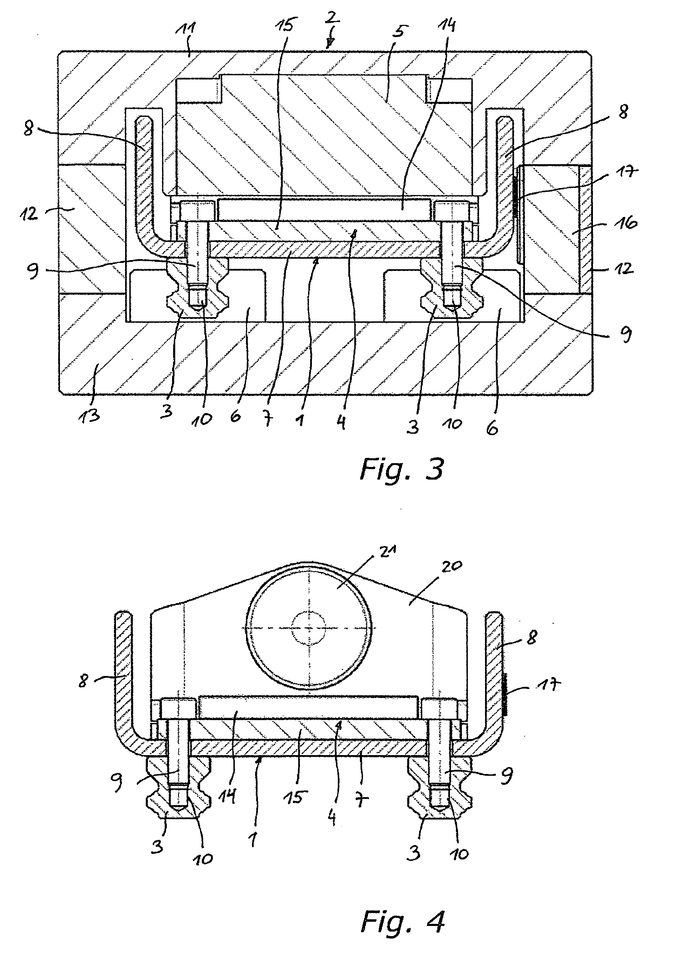

Das in den Fig. 2 bis Fig. 5 dargestellte erfindungsgemäße Linearmotorsystem zeigt einen äußerst kompakten Aufbau. Wie insbesondere in den Fig. 3 und Fig. 4 erkennbar, sind hier die beiden separaten Führungsschienen 3 und der Sekundärteil 4 der Antriebseinheit auf gegenüberliegenden Seiten eines Basisbereiches 7 des Grundprofils 1 angeordnet. Das Grundprofil 1 kann dabei herstellungstechnisch einfach aus einem Stahlblech geformt werden, wobei ein im Wesentlichen U-förmiger Querschnitt mit beidseitig vom Basisbereich 7 fortragenden Flanschbereichen 8 hergestellt wird.

Für die Befestigung der Führungsschienen 3 und des Sekundärteils 4 der Antriebseinheit wird der selbe Satz Schrauben 9 verwendet, wobei die Schrauben 9 zur gleichzeitigen Befestigung der Führungsschienen 3 und des Sekundärteils 4 in Sacklochbohrungen 10 der Führungsschienen 3 befestigt sind.

An zumindest einem der Flanschbereiche 8 ist ein Maßband 17 angeordnet, das mit einer Messkopfeinheit 16 am Motorschlitten 2 zusammenwirkt.

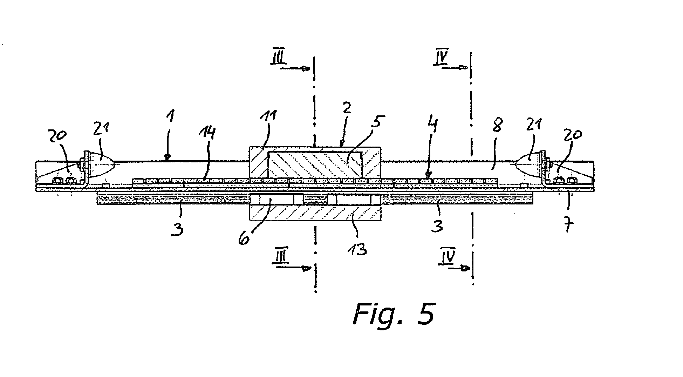

In den beiden Endbereich des Grundprofils 1 ist jeweils ein Endanschlag 20 mit einem elastischen Pufferelement 21 angeordnet, der am Basisbereich 7 (siehe Fig. 4 oder Fig. 5) oder an den Flanschbereichen 8 (nicht dargestellt) des Grundprofils 1 befestigt ist.

Der Sekundärteil 4 der Antriebseinheit weist eine Vielzahl streifenförmiger Magnetplatten 14 auf, die auf einer Trägerplatte 15 angeordnet, beispielsweise durch Kleben befestigt, sind, wobei die Trägerplatte 15 unter Zwischenlage des Basisbereichs 7 des Grundprofils 1 mit den Führungsschienen 3 verschraubt ist (siehe Fig. 4).

Der Motorschlitten 2 des Linearmotorsystems besteht im Wesentlichen aus einer den Primärteil 5 aufnehmenden Motorplatte 11, die über Seitenteile 12 mit einer Schlittenplatte 13 verbunden ist, an welcher die Schlittenführungen 6 befestigt sind. Es entsteht dadurch eine nach außen abgeschlossene, kompakte Einheit, die vom Grundprofil 1 durchsetzt wird.

In einem der Seitenteile 12 des Motorschlittens 2 kann eine Messkopfeinheit 16 integriert sein, welche mit dem Maßband 17 zusammenwirkt, das am Flanschbereiche 8 des Grundprofils 1 befestigt ist (siehe Fig. 2). Das Gehäuse der Messkopfeinheit 16 kann dabei bevorzugt als tragender Seitenteil 12 des Motorschlittens 2 ausgebildet sein.

Weiters sind in Fig. 2 auch die elektrischen Anschlussbuchsen 18, 19 für die Messkopfeinheit 16 und den Primärteil 5 der Antriebseinheit angedeutet.

Bei der dargestellten Ausführungsvariante ist der Motorschlitten 2 der bewegliche Teil. Es sei jedoch angemerkt, dass auch eine Invertierung des Bewegungskonzepts möglich ist und somit Anwendungen denkbar sind, bei welchen das Grundprofil 1 der bewegliche Teil des erfindungsgemäßen Linearmotorsystems ist.

## Patentansprüche

1. Linearmotorsystem mit einem Grundprofil (1) und einem linear zum Grundprofil (1) bewegbaren Motorschlitten (2), wobei am Grundprofil (1) zwei separate Führungsschienen (3) und ein Sekundärteil (4) einer Antriebseinheit befestigt sind und der Motorschlitten (2) mit Schlittenführungen (6) und einem Primärteil (5) der Antriebseinheit ausgestattet ist, wobei die Führungsschienen (3) mit Schrauben (9) an einer Seite eines Basisbereiches (7) des Grundprofils (1) befestigt sind, **dadurch gekennzeichnet, dass** die beiden Führungsschienen (3) und der Sekundärteil (4) auf gegenüberliegenden Seiten des Basisbereiches (7) des Grundprofils (1) angeordnet sind, wobei die Schrauben (9) an der den Führungsschienen (3) gegenüberliegenden Seite des Basisbereiches (7) den Sekundärteil (4) der Antriebseinheit befestigen.

2. Linearmotorsystem nach Anspruch 1, **dadurch gekennzeichnet, dass** die Schrauben (9) zur gleichzeitigen Befestigung der Führungsschienen (3) und des Sekundärteils (4) in Sacklochbohrungen (10) der Führungsschienen (3) befestigt sind.

3. Linearmotorsystem nach Anspruch 1 oder 2, **dadurch gekennzeichnet, dass** das Grundprofil (1) einen im Wesentlichen U-förmigen Querschnitt mit beidseitig vom Basisbereich (7) fortragenden Flanschbereichen (8) aufweist und vorzugsweise aus Stahlblech geformt ist.

4. Linearmotorsystem nach Anspruch 3, **dadurch gekennzeichnet, dass** an zumindest einem der Flanschbereiche (8) ein Maßband (17) angeordnet ist, welches mit einer Messkopfeinheit (16) am Motorschlitten (2) zusammenwirt.

5. Linearmotorsystem nach Anspruch 3 oder 4, **dadurch gekennzeichnet, dass** in zumindest einem Endbereich des Grundprofils (1) ein Endanschlag (20) angeordnet ist, der am Basisbereich (7) oder an den Flanschbereichen (8) des Grundprofils (1) befestigt ist.

6. Linearmotorsystem nach Anspruch 1 oder 2, **dadurch gekennzeichnet, dass** der Sekundärteil (4) der Antriebseinheit eine Trägerplatte (15) aufweist, auf welcher die beispielsweise streifenförmige Magnetplatten (14) des Sekundärteils (4) vorzugsweise durch Kleben befestigt sind, wobei die Trägerplatte (15) unter Zwischenlage des Basisbereichs (7) des Grundprofils (1) mit den Führungsschienen (3) verschraubt ist.

7. Linearmotorsystem nach einem der Ansprüche 1 bis 6, **dadurch gekennzeichnet, dass** der Motorschlitten (2) eine den Primärteil (5) der Antriebseinheit aufnehmende Motorplatte (11) aufweist, die über Seitenteile (12) mit einer Schlittenplatte (13) verbunden ist, an welcher die Schlittenführungen (6) befestigt sind.

8. Linearmotorsystem nach Anspruch 7, **dadurch gekennzeichnet, dass** die Motorplatte (11), die Seitenteile (12) und die Schlittenplatte (13) eine geschlossene Einheit bilden, die vom Grundprofil (1) durchsetzt ist.

9. Linearmotorsystem nach Anspruch 7 oder 8, **dadurch gekennzeichnet, dass** in einem der Seitenteile (12) des Motorschlittens (2) eine Messkopfeinheit (16) angeordnet ist.

10. Linearmotorsystem nach Anspruch 9, **dadurch gekennzeichnet, dass** das Gehäuse der Messkopfeinheit (16) als tragender Seitenteil (12) des Motorschlittens (2) ausgebildet ist.

## Claims

1. A linear motor system, comprising a base profile (1) and a motor slide (2) which can be moved linearly to the base profile (1), with two separate guide rails (3) and a secondary part (4) of a drive unit being fastened to the base profile (1), and with the motor slide (2) being provided with slide guides (6) and a primary part (5) of the drive unit, with the guide rails (3) being fixed with screws (9) to one side of a base area (7) of the base profile (1), **characterised in that** the two guide rails (3) and the secondary part (4) are arranged on opposite sides of the base area (7) of the base profile (1), with the screws (9) on the side of the base area (7) which is opposite of the guide rails (3) fixing the secondary part (4) of the drive unit.

2. A linear motor system according to claim 1, **characterised in that** the screws (9) are fixed in blind hole bores (10) of the guide rails (3) for the simultaneous fixing of the guide rails (3) and the secondary part (4).

3. A linear motor system according to claim 1 or 2, **characterised in that** the base profile (1) has a substantially U-shaped cross-section with flange areas (8) protruding on both sides from the base area (7) and is preferably formed of sheet steel.

4. A linear motor system according to claim 3, **characterised in that** a measuring tape (17) is arranged on at least one of the flange areas (8), which measuring tape cooperates with a measuring head unit (16) on the motor slide (2).

5. A linear motor system according to claim 3 or 4, **characterised in that** a limit stop (20) is arranged in at least one end region of the base profile (1), which limit stop is fixed to the base area (7) or to the flange areas (8) of the base profile (1).

6. A linear motor system according to claim 1 or 2, **characterised in that** the secondary part (4) of the drive unit comprises a support plate (15), on which the magnetic plates (14) of the secondary part (4) which are strip-like for example are preferably fastened by gluing, with the support plate (15) being screwed together with the guide rails (3) by interposing the base area (7) of the base profile (1).

7. A linear motor system according to one of the claims 1 to 6, **characterised in that** the motor slide (2) comprises a motor plate (11) which accommodates the primary part (5) of the drive unit and which is connected via side parts (12) with a slide plate (13) to which the slide guides (6) are fastened.

8. A linear motor system according to claim 7, **characterised in that** the motor plate (11), the side parts (12) and the slide plate (13) form an enclosed unit which is penetrated by the base profile (1).

9. A linear motor system according to claim 7 or 8, **characterised in that** a measuring head unit (16) is arranged in one of the side parts (12) of the motor slide (2).

10. A linear motor system according to claim 9, **characterised in that** the housing of the measuring head unit (16) is arranged as a supporting side part (12) of the motor slide (2).

## Revendications

1. Système de moteur linéaire comportant un profilé de base (1) et un chariot de moteur (2) mobile en translation par rapport au profilé de base (1), deux rails de guidage (3) séparés, et une partie secondaire (4) d'une unité d'entrainement étant fixés sur le profilé de base (1) et le chariot de moteur (2) étant équipé d'éléments de guidage de chariot (6) et d'une partie primaire (5) de l'unité d'entrainement, les rails de guidage (3) étant fixés au moyen de vis sur un côté d'une zone de fond (7) du profilé de base (1),
**caractérisé en ce que**
les deux rails de guidage (3) et la partie secondaire (4) sont positionnés sur des côtés opposés de la zone de fond (7) du profilé de base (1), les vis (9) fixant la partie secondaire (4) de l'unité d'entrainement sur le côté de la zone de fond (7) opposé aux rails de guidage (3).

2. Système de moteur linéaire conforme à la revendication 1,
**caractérisé en ce que**
les vis (9) sont montées pour permettre la fixation simultanée des rails de guidage (3) et de la partie secondaire (4) dans des perçages borgnes (10) de ces rails de guidage (3).

3. Système de moteur linéaire conforme à la revendication 1 ou 2,
**caractérisé en ce que**
le profilé de base (1) présente une section essentiellement en forme de U comportant des zones de brides (8) faisant saillie de part et d'autre de la zone de fond (7) et est de préférence réalisé en tôle d'acier.

4. Système de moteur linéaire conforme à la revendication 3,
**caractérisé en ce que**
sur au moins l'une des zones de brides (8) est montée une bande de mesure (17) qui coopère avec une unité de tête de mesure (16) montée sur le chariot de moteur (2).

5. Système de moteur linéaire conforme à la revendication 3 ou 4,
**caractérisé en ce qu'**
au moins une zone d'extrémité du profilé de base (1) est équipée d'une butée de fin de course (20) qui est fixée sur la zone de fond (7) ou sur les zones de brides (8) du profilé de base (1).

6. Système de moteur linéaire conforme à la revendication 1 ou 2,
**caractérisé en ce que**
la partie secondaire (4) de l'unité d'entrainement comporte une plaque support (15) sur laquelle sont fixées de préférence par collage les plaques magnétiques (14) notamment en forme de bandes de la partie secondaire (4), cette plaque support (15) étant visée aux rails de guidage (3) avec interposition de la zone de fond (7) du profilé de base (1).

7. Système de moteur linéaire conforme à l'une des revendications 1 à 6,
**caractérisé en ce que**
le chariot de moteur (2) comporte une plaque de moteur (11) qui reçoit la partie primaire (5) de l'unité d'entraînement et est reliée par l'intermédiaire de parties latérales (12) à une plaque de chariot (13) sur laquelle sont fixés les éléments de guidage de chariot (6).

8. Système de moteur linéaire conforme à la revendication 7,
**caractérisé en ce que**
la plaque de moteur (11), les parties latérales (12) et la plaque de chariot (13) forment une unité fermée qui est traversée par le profilé de base (1).

9. Système de moteur linéaire conforme à la revendication 7 ou 8,
**caractérisé en ce qu'**
une unité de tête de mesure (16) est montée dans l'une des parties latérales (12) du chariot de moteur (2).

10. Système de moteur linéaire conforme à la revendication 9,
**caractérisé en ce que**
le boîtier de l'unité de tête de mesure (16) est réalisé sous la forme d'une partie latérale portante (12) du chariot de moteur (2).
